Europäisches Patentamt

European Patent Office

Office européen des brevets

(19)

(11) Publication number : **0 298 675 B1**

# EUROPEAN PATENT SPECIFICATION

(12)

(45) Date of publication of patent specification :
19.02.92 Bulletin 92/08

(51) Int. Cl.⁵ : **B21B 27/02**

(21) Application number : 88306062.6

(22) Date of filing : 04.07.88

(54) **Sleeve mounting and removal tool.**

(30) Priority : 06.07.87 US 70295

(43) Date of publication of application :
11.01.89 Bulletin 89/02

(45) Publication of the grant of the patent :
19.02.92 Bulletin 92/08

(84) Designated Contracting States :
DE FR GB IT SE

(56) References cited :
EP-A- 0 125 452
DE-A- 1 810 941
LU-A- 66 075
US-A- 3 803 691
PATENT ABSTRACTS OF JAPAN, vol. 9, no.
179 (M-399)[1902], 24th July 1985

(73) Proprietor : **MORGAN CONSTRUCTION
COMPANY (a Massachusetts corporation)
15 Belmont Street
Worcester Massachusetts 01605 (US)**

(72) Inventor : **Howard, Robert S.
226 Hampton Street
Auburn, MA., 01501 (US)**
Inventor : **Nasrah, Camille S.
1 Clarendon Street
Worcester, MA. 01604 (US)**

(74) Representative : **Sanders, Peter Colin
Christopher et al
BROOKES & MARTIN High Holborn House
52/54 High Holborn
London WC1V 6SE (GB)**

## Description

This invention relates according to the preamble of claim 1 generally to the art of changing work rolls in a rolling mill, and is concerned in particular with an improved tool for changing so-called "overhung" work rolls in rod and bar mills.

As part of the ongoing effort to increase the production efficiency of rolling mills, more attention is being focused on minimizing the down time occasioned by the need to change work rolls. To this end, mechanical manipulators and robots are being developed to assist operating personnel in performing this task as rapidly as possible. However, efforts to effectively utilize manipulators and robots have been frustrated by the handling complexities associated with conventional roll changing tools.

More particularly, overhung work rolls are conventionally fixed to the tapered ends of roll support shafts by means of tapered sleeves interposed in wedged engagement therebetween. A variety of hydraulically actuated tools have been developed to provide the considerable axial force required to seat and unseat the tapered sleeves. In some cases, two tools are required, one to seat the sleeves during roll mounting, and the other to unseat the sleeves during roll removal. In other cases, one tool accomplishes both functions by having its opposite ends adapted respectively to seat and unseat the sleeves.

In cases where two tools are required, the manipulators or robots must either be provided with two sets of arms, thereby increasing costs and operating complexities, or the tools must be manually interchanged, with considerable attendant lost time. In cases where one tool has its opposite ends adapted to handle both sleeve insertion and sleeve removal, the tool must be turned end to end during each roll changing operation. This again unduly increases operating complexities.

A primary objective of the present invention is to provide a novel and improved hydraulic tool which can accomplish both the sleeve insertion and sleeve removal functions without the need to turn the tool end to end.

A companion objective of the present invention is to provide a hydraulic tool which is simple to operate and consequently easily adaptable for use with mechanical manipulators, robots or the like

In PATENT ABSTRACTS OF JAPAN, Vol 9, No 179 (M-399)(1902) representing the closest prior art, there is disclosed a roll mounting device for a cantilever work roll in a rolling mill wherein a sleeve is axially shifted into and out of wedged engagement between the work roll and a support shaft for the roll. The device comprises a fluid actuated piston-cylinder assembly having an axially extending mounting stem releasably engaged with the roll shaft in axial alignment therewith, the cylinder being angularly displaceable on the stem between a first sleeve removal position and a second sleeve inserting position.

The piston-cylinder assembly incorporates two pistons disposed in respective chambers on opposite sides of a double-acting cylinder head, one chamber being pressurised when removing the sleeve and the other when inserting the sleeve such that the cylinder head is driven in opposite directions.

According to the present invention, a tool of the type generally disclosed in the above Japanese Abstract and having the features of claim 1 is characterised by a piston-cylinder assembly having only a single piston, the arrangement being such that, with the cylinder in its first sleeve removal position, actuation of the piston-cylinder assembly urges the piston against the roll shaft while the cylinder engages and removes the sleeve and, with the cylinder in its second sleeve inserting position, actuation of the piston-cylinder assembly urges the cylinder against a stop on the mounting stem and the piston against the sleeve such that the sleeve is urged into wedged engagement between the roll and the roll shaft.

The mounting stem is preferably received in detachably interlocked engagement within an axial blind bore in the end of the roll shaft. When in the sleeve removal position, the piston bears against the shaft end and the cylinder engages and removes the sleeve. When in the sleeve insertion position, the cylinder is checked against a stop on the mounting stem and the piston urges the sleeve into wedged engagement between the roll and the shaft.

In the accompanying drawings, by way of example only:-

Figure 1 is a sectional view through a tool embodying the present invention, showing the tool adjusted for sleeve removal;

Figure 2 is a sectional view, with portions broken away, taken on line 2-2 of Figure 1;

Figure 3 is a partial sectional view similar to Figure 1, showing the tool at the conclusion of the sleeve removal stroke;

Figure 4 is another partial sectional view showing the tool adjusted for sleeve insertion; and

Figure 5 is a view similar to Figure 4 showing the tool at the conclusion of the sleeve insertion stroke.

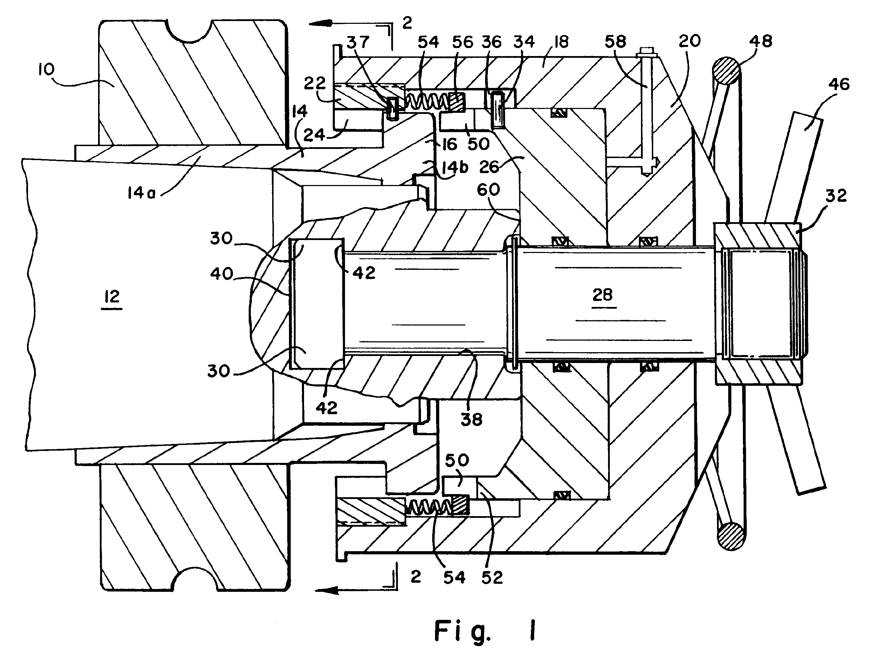

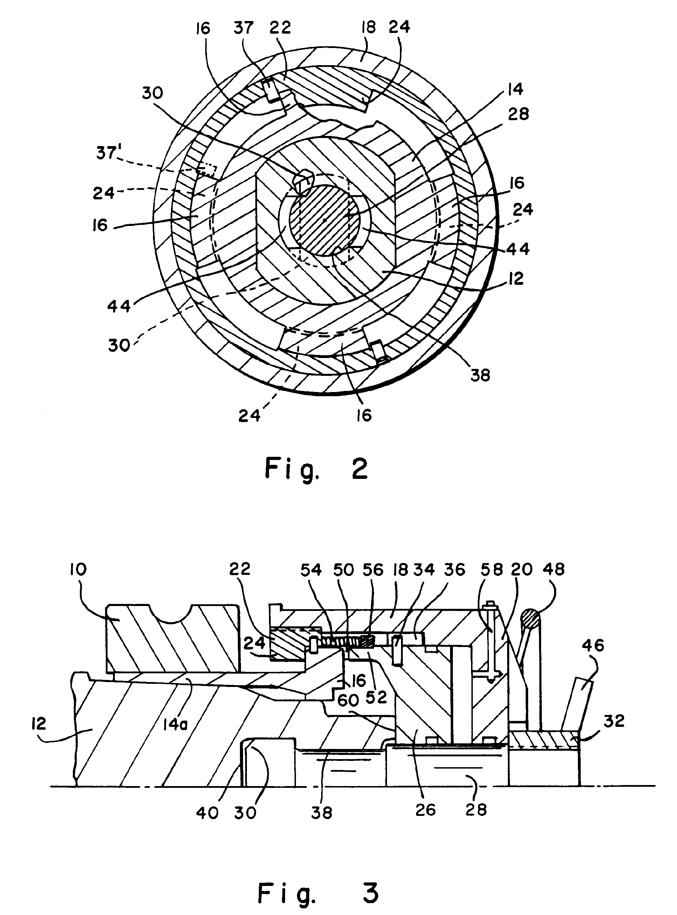

Referring initially to Figures 1 and 2, an annular roll 10 is shown mounted in a conventional manner on the end of a roll shaft 12 by means of a tapered sleeve 14 having one end 14a axially inserted in wedged engagement therebetween. The opposite end 14b of the sleeve is spaced axially from the outboard face of the roll 10 and is provided with a series of circumferentially spaced first lugs 16 extending radially outwardly therefrom.

A tool for inserting and removing the sleeve 14 includes a cylinder 18 closed at one end by an end wall 20 and open at the opposite end. A ring 22 is threaded into the open end of the cylinder and is provided with a series of circumferentially spaced second lugs 24 extending radially inwardly therefrom.

A piston 26 is contained within the cylinder 18. A mounting stem 28 extends axially through both the piston 26 and the cylinder 18. One end of the mounting stem protrudes from the open cylinder end and is provided with oppositely extending lateral bosses 30. The opposite end of the mounting stem protrudes through the cylinder end wall 20 and is provided with an enlarged collar 32 forming a stop. The piston and cylinder are shiftable in opposite directions in relation to each other as well as in relation to the mounting stem, with the axial shifting of the cylinder in the outboard direction (to the right as viewed in Figure 1) being limited by engagement with the collar 32. The piston and cylinder are also rotatable in relation to the mounting stem. A pin 34 on the piston 26 extends radially into a slot 36 in the cylinder wall to prevent relative rotation between the piston and cylinder. Another pin 37 protrudes radially inwardly from the ring 22 threaded into the open end of the cylinder 18.

The roll shaft 12 has a blind note bore defined by an axial passageway 38 leading to an enlarged diameter chamber 40, with the juncture between the chamber and passageway defining locking surfaces or shoulders 42. The passageway 38 is laterally enlarged by side slots 44 configured and dimensioned to accommodate the oppositely extending lateral bosses 30 on the mounting stem. By aligning the bosses 30 with the side slots 44, the mounting stem 28 can be inserted into the passageway to place the bosses 30 in the chamber 40. Then, by rotating the stem 90°, the bosses can be positioned behind the locking shoulders 42, thereby placing the mounting stem in axially interlocked engagement with the roll shaft 12. A reverse 90° rotation frees the stem for axial disengagement from the roll shaft. The mounting stem 28 and cylinder 18 are respectively provided with exterior handles 46,48 to facilitate their rotative adjustment.

In the condition shown in Figures 1 and 2, the tool has been axially received on the end of the roll shaft 12. The stem 28 has been rotatably adjusted to locate its bosses 30 behind the locking shoulders 42, thereby achieving an axial interlock of the tool on the shaft end.

The cylinder 18 has been rotated with respect to the stem 28 to locate the second lugs 24 behind and in alignment with the first lugs 16 on the outboard end 14b of sleeve 14. Because of the mechanical interlock between the piston and sleeve provided by the pin 34 received in slot 36, a corresponding rotation has been imparted to the piston to thereby align slots 50 in its annular end flange 52 with the first lugs 16.

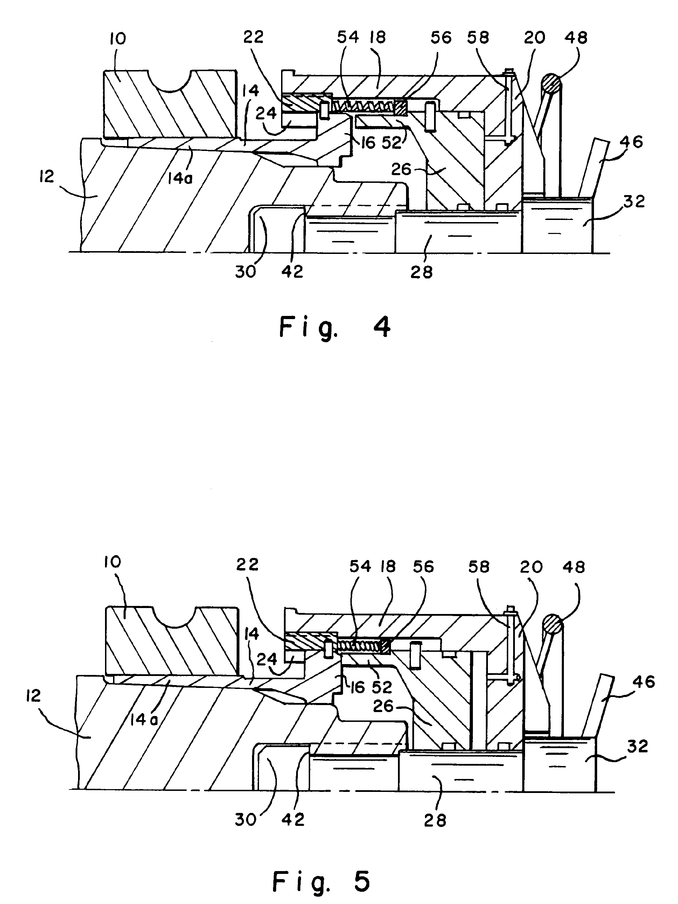

Compression springs 54 are interposed between the ring 22 and snap ring 56 on the piston end flange 52. The springs 54 resiliently urge the piston against the end wall 20 of the cylinder 18. A hydraulic fluid passageway 58 leads to the interface between the piston 26 and cylinder end wall 20. When hydraulic fluid is pumped into passageway 58, the piston 26 and cylinder end wall 20 are axially separated. The piston is checked against the end of the roll shaft 12 as at 60, thereby causing the cylinder 18 to be shifted axially in the outboard direction (to the right as viewed in Figure 1) with respect to both the stem 28 and the piston 26. Thus as shown in Figure 3, because of the mechanical interlock of the second lugs 24 behind the first lugs 16, the sleeve 14 is pulled axially out of its seated position in wedged engagement between the roll 10 and shaft 12. The slots 50 in the end flange 52 of the piston receive the first lugs 16 as the sleeve is drawn towards the piston. The axial movement of the sleeve relative to the piston compresses the springs 54. Consequently, when hydraulic fluid pressure is relieved , the springs 54 return the sleeve to the position shown in Figure 1. Then, by rotating the cylinder 18 to align the second lugs 24 with the spaces between the first lugs 16, and by rotating the stem 28 to align the bosses 30 with the side slots 44 in passageway 38, the tool can be removed from the roll shaft, after which the sleeve and roll can be dismantled.

Figures 4 and 5 illustrate the operating sequence during roll mounting, which entails forcibly seating the sleeve 14 between the roll and the roll shaft. As sown in Fig. 4, the tool is again mounted on the end of the roll shaft 12, with the mounting stem 28 received in passageway 38, and with the lateral bosses 30 interlocked behind the locking shoulders 42. The cylinder 18 is rotatably adjusted to align the spaces between the second lugs 24 with the first lugs 16 on the sleeve. Hydraulic fluid is again pumped into passageway 58 to axially separate the piston 26 from the cylinder end wall 20. The cylinder end wall is checked against the stem shoulder 32, and the piston is moved axially in the inboard direction (to the left as viewed in Figures 4 and 5). The end flange 52 on the piston engages the first lugs 16 on the sleeve, causing the sleeve to be forcibly wedged between the roll 10 and shaft 12, as shown in Figure 5. The spaces between the second lugs 24 accommodate movement of the sleeve relative to the cylinder, and movement of the piston 26 relative to the cylinder 18 again compresses the springs 54. Thus, when hydraulic pressure is relieved, the springs 54 return the piston to the position shown in Figure 4. Then, by simply rotating the stem 28 to disengage the bosses 30 from the locking shoulders 42, the tool can be removed from the roll shaft.

When in the position shown by the solid lines in Figure 2, the pin 37 abuts a side of one of the first lugs 16 and thus locates the second lugs 24 behind the first lugs for sleeve removal. When the cylinder is rotated in a counterclockwise direction to cause pin 37 to abut the side of the next adjacent first lug 16 (as shown by the broken lines at 37' in Figure 2), the spaces between the second lugs 24 are aligned with the first lugs 16 for sleeve insertion.

In light of the foregoing, it will now be appreciated by those skilled in the art that the tool of the present invention offers a number of significant advantages. For example, the tool may be rapidly engaged with the shaft end by simply inserting the mounting stem 28 into the passageway 38 and then turning it through a quarter turn to engage the bosses 30 behind the locking shoulders 42. Disengagement merely requires reversing this simple procedure.

The tool is rapidly and easily adjusted for either sleeve removal or sleeve insertion by simply rotating the cylinder between the two positions established by the locating pin 37. Both removal and insertion are effected by connecting the same end of the tool to the roll shaft.

## Claims

1. A tool for axially shifting a sleeve (14) into and out of wedged engagement between a work roll (10) and a support shaft (12) for the roll, the tool comprising a fluid actuated piston-cylinder assembly (26, 18) having an axially extending mounting stem (28) releasably engageable with the roll shaft (12) in axial alignment therewith, the cylinder (18) being angularly displaceable on the stem (28) between a first sleeve removal position and a second sleeve inserting position, the arrangement being such that, with the cylinder (18) in its first position, actuation of the piston-cylinder assembly urges the piston (26) against the roll shaft (12) while the cylinder (18) engages and removes the sleeve (14), characterised in that, with the cylinder (18) in its second position, actuation of the piston-cylinder assembly urges the cylinder (18) against a stop (32) on the mounting stem (28) and the piston (26) against the sleeve (14) such that the sleeve (14) is urged into wedged engagement between the roll (10) and the roll shaft (12).

2. A tool according to claim 1 for shifting a sleeve having one end axially inserted in wedged engagement between the roll and the shaft and having an opposite end spaced axially from the roll with circumferentially spaced first lugs (16) extending radially outwardly therefrom, wherein the cylinder (18) is closed at one end and open at the opposite end, with circumferentially spaced second lugs (24) extending radially inwardly from the cylinder at the said opposite end; the first lugs (16) being arranged in a plane axially located between the second lugs (24) and the piston (26) such that, with the cylinder (18) in its sleeve removal position, the second lugs (24) are aligned in an interlocked relationship with the first lugs (16), and, with the cylinder (18) in its sleeve inserting position, the second lugs (24) are aligned with the spaces between the first lugs (16).

3. A tool according to claim 2 wherein the piston-cylinder assembly (26, 18) is actuated by introducing a pressurized fluid medium between the piston (26) and the closed end of the cylinder, whereupon when the cylinder (18) is in the sleeve removal position, the piston (26) is urged in one direction against the roll shaft (12) and the cylinder (18) is urged in the opposite direction to disengage the sleeve (14) from between the roll (10) and shaft (12), and whereupon when the cylinder (18) is in the sleeve inserting position, the cylinder (18) is urged in one direction against the stop (32) and the piston is urged in the opposite direction against the first lugs (16).

4. A tool as claimed in claim 2 or claim 3 further comprising means (54) for resiliently biasing the piston (26) towards the closed end of the cylinder (18).

5. A tool as claimed in any one of the claims 2-4, wherein the roll shaft (12) has a blind bore (38) adapted to axially receive an end of the stem (28), the bore (38) having locking surfaces (42) to be rotatably engaged by laterally extending bosses (30) on the said end of the stem (28).

6. A tool as claimed in claim 5 further comprising external handle means (46, 48) at the closed end of the cylinder (18) for rotatably manipulating the cylinder and the stem.

7. A tool as claimed in any one of the claims 2-6 further comprising locating means (37) for limiting the rotation of the cylinder (18) between the sleeve removal position and the sleeve inserting position.

## Patentansprüche

1. Gerät zum axialen Verschieben einer Buchse (14) in und außer Keileingriff zwischen einer Arbeitswalze (10) und einer Tragachse (12) für die Walze, mit einer durch ein Fluid betätigten Kolben-Zylinder-Einheit (26, 18), die einen sich axial erstreckenden Montageschaft (28) aufweist, welcher lösbar an der Tragachse (12) und axial mit dieser fluchtend in Eingriff bringbar ist, wobei der Zylinder (18) auf dem Schaft (28) winkelverdrehbar ist zwischen einer ersten Buchsen-Entfern-Position und einer zweiten Buchsen-Einführ-Position, wobei die Anordnung derart getroffen ist, daß bei Stellung des Zylinders (18) in seiner ersten Position eine Betätigung der Kolben-Zylinder-Einheit den Kolben (26) gegen die Tragachse (12) drückt, während der Zylinder (18) an der Buchse (14) angreift und diese entfernt, dadurch gekennzeichnet, daß bei Stellung des Zylinders (18) in seiner zweiten Position die Betätigung der Kolben-Zylinder-Einheit den Zylinder (18) gegen einen Anschlag (32) am Montageschaft (28), und den Kolben (26) gegen die Buchse (14) drückt, so daß die Buchse (14) in Teileingriff zwischen Walze (10) und Tragachse (12) gelangt.

2. Gerät nach Anspruch 1 zum Verschieben einer Buchse, deren eines Ende axial in Keileingriff zwischen der Walze und der Achse gebracht ist, und deren gegenüberliegendes Ende einen axialen Abstand zur Walze aufweist mit über den Umfang verteilt angeordneten ersten Vorsprüngen, die sich radial nach außen erstrecken, wobei der Zylinder (18) an einem Ende geschlossen und am gegenüberliegenden Ende offen ist, mit über den Umfang verteilt angeordneten zweiten Vorsprüngen (24), die sich radial vom Zylinder an dem genannten gegenüberliegenden Ende nach innen erstrecken, wobei die ersten Vorsprünge (16) in einer Ebene liegen, die axial zwischen den zweiten Vorsprüngen (24) und dem Kolben (26) angeordnet sind, derart, daß sich die zweiten Vorsprünge (24) bei Stellung des Zylinders (18) in seiner Buchsen-Entfern-Position mit den ersten Vorsprüngen (16) in einem Verriegelungsverhältnis befinden, und daß die zweiten Vorsprünge (16) bei Stellung des Zylinders (18) in seiner Buchsen-Einführ-Position auf die Zwischenräume zwischen den ersten Vorsprüngen (16) ausgerichtet sind.

3. Gerät nach Anspruch 2, wobei die Kolben-Zylinder-Einheit (26, 18) durch Einführen eines unter Druck stehenden Fluids zwischen dem Kolben (26) und dem geschlossenen Ende des Zylinders betätigt wird, worauf dann, wenn sich der Zylinder (18) in seiner Buchsen-Entfern-Position befindet, der Kolben (26) in eine Richtung entgegen der Walzenachse (12) gedrückt wird, und der Zylinder (18) in die entgegengesetzte Richtung gedrückt wird, um die Buchse (14) aus der Position zwischen der Walze (10) und der Achse (12) zu lösen, und worauf dann, wenn der Zylinder (18) sich in der Buchsen-Einführ-Position befindet, der Zylinder (18) in einer Richtung entgegen dem Anschlag (32) gedrückt wird, und der Kolben entgegen den ersten Vorsprüngen (16) in die entgegengesetzte Richtung gedrückt wird.

4. Gerät nach Anspruch 2 oder 3, dadurch gekennzeichnet, daß Mittel (54) zum elastischen Beaufschlagen des Kolbens (26) gegen das geschlossene Ende des Zylinders (18) vorgesehen sind.

5. Gerät nach einem der Ansprüche 2 bis 4, dadurch gekennzeichnet, daß die Walzenachse (12) eine Sackbohrung (38) aufweist, die derart gestaltet ist, daß sie ein Ende des Schaftes (28) axial aufzunehmen vermag, und daß die Bohrung (38) Verriegelungsflächen (42) aufweist, die mit seitlich sich erstreckenden Buckeln (30) auf dem genannten Ende des Schaftes (28) drehbar in Eingriff gelangen.

6. Gerät nach Anspruch 5, dadurch gekennzeichnet, daß dieses weiterhin ein äußeres Handrad (46, 48) am geschlossenen Ende des Zylinders (18) aufweist, um den Zylinder und den Schaft durch Verdrehen zu betätigen.

7. Gerät nach einem der Ansprüche 2 bis 6, dadurch gekennzeichnet, daß dieses weiterhin Plaziermittel (37) zum Begrenzen des Verdrehens des Zylinders (18) zwischen der Buchsen-Entfern-Position und der Buchsen-Einführ-Position aufweist.

**Revendications**

1. Outil pour déplacer axialement un manchon (14) afin de l'amener dans, et de le dégager de, une prise conique entre un cylindre de travail (10) et un arbre (12) de support pour le cylindre, l'outil comportant un ensemble à piston-cylindre (26, 18) actionné par fluide ayant une tige (28) de montage s'étendant axialement pouvant s'enclencher de façon amovible avec l'arbre (12) de cylindre de travail en alignement axial avec lui, le cylindre (18) pouvant être déplacé angulairement sur la tige (28) entre une première position d'enlèvement du manchon et une seconde position d'insertion du manchon, l'agencement étant tel que, le cylindre (18) dans sa première position, l'actionnement de l'ensemble à piston-cylindre sollicite le piston (26) contre l'arbre (12) du cylindre de travail tandis que le cylindre (18) engage et enlève le manchon (14), caractérisé en ce que, le cylindre (18) étant dans sa seconde position, l'actionnement de l'ensemble à piston-cylindre sollicite le cylindre (18) contre une butée (32) située sur la tige (28) de montage et le piston (26) contre le manchon (14) de manière que le manchon (14) soit amené à force en prise conique entre le cylindre de travail (10) et l'arbre (12) du cylindre de travail.

2. Outil selon la revendication 1 destiné à déplacer un manchon ayant une première extrémité insérée axialement en prise conique entre le cylindre de travail et l'arbre et ayant une extrémité opposée espacée axialement du cylindre de travail, et de laquelle font saillie radialement vers l'extérieur des premiers taquets (16) espacés circonférentiellement, le cylindre (18) étant fermé à une extrémité et ouvert à l'extrémité opposée, des seconds taquets (24) espacés circonférentiellement faisant saillie radialement vers l'intérieur du cylindre à ladite extrémité opposée ; les premiers taquets (16) étant agencés dans un plan situé axialement entre les seconds taquets (24) et le piston (26) de manière que, le cylindre (18) étant dans sa position d'enlèvement du manchon, les seconds taquets (24) soient alignés dans une disposition de verrouillage avec les premiers taquets (16), et, le cylindre (18) étant dans sa position d'insertion du manchon, les seconds taquets (24) soient alignés avec les espaces entre les premiers taquets (16).

3. Outil selon la revendication 2, dans lequel l'ensemble à piston-cylindre (26, 18) est actionné par l'introduction d'un milieu fluide sous pression entre le piston (26) et l'extrémité fermée du cylindre, à la suite de quoi, lorsque le cylindre (18) est dans la position d'enlèvement du manchon, le piston (26) est sollicité dans une direction contre l'arbre (12) de cylindre de travail et le cylindre (18) est sollicité dans la direction opposée pour dégager le manchon (14) d'entre le cylindre de travail (10) et l'arbre (12) et à la suite de quoi, lorsque le cylindre (18) est dans la position d'insertion du manchon, le cylindre (18) est sollicité dans une direction contre la butée (32) et le piston est sollicité dans la direction opposée contre les premiers taquets (16).

4. Outil selon la revendication 2 ou la revendication 3, comportant en outre des moyens (54) destinés à rappeler élastiquement le piston (26) vers l'extrémité fermée du cylindre (18).

5. Outil selon l'une quelconque des revendications 2-4, dans lequel l'arbre (12) du cylindre de travail présente un alésage borgne (38) conçu pour recevoir axialement une extrémité de la tige (28), l'alésage (38) présentant des surfaces (42) de blocage destinées à être engagées en rotation par des protubérances (30) s'étendant latéralement sur ladite extrémité de la tige (28).

6. Outil selon la revendication 5, comportant en outre des moyens à poignées extérieures (46, 48) à l'extrémité fermée du cylindre (18) pour manipuler en rotation le cylindre et la tige.

7. Outil selon l'une quelconque des revendications 2-6, comportant en outre des moyens de positionnement (37) pour limiter la rotation du cylindre (18) entre la position d'enlèvement du manchon et la position d'insertion du manchon.

Fig. 1

Fig. 2

Fig. 3

Fig. 4

Fig. 5